# DEMANDE DE BREVET EUROPEEN

(11) **EP 4 670 946 A1**
(43) Date de publication de la demande: **31.12.2025**
(21) Numéro de dépôt: 25185737.1
(22) Date de dépôt: 27.06.2025
(51) Int. Cl.: B29C 44/04, B29C 44/06, B29C 44/12, B29C 44/14

(54) **ELÉMENT DE GARNITURE POUR SIÈGE DE VÉHICULE ET PROCÉDÉ DE FABRICATION ASSOCIÉ**

(30) Priorité: 27.06.2024 FR 2406925
(71) Demandeur: Faurecia Sièges d'Automobile, 92000 Nanterre (FR)
(72) Inventeur: FOUINAT, Didier, 91530 SAINT-CHERON (FR); ETIENNE, Fabrice, 90800 BAVILLIERS (FR); DESGRANCHAMPS, Jerome, 70000 VESOUL (FR); VILELA, Nathalie, 70 000 MONTIGNY LES VESOUL (FR)
(74) Mandataire: Lavoix

(57) **Abrégé**

La présente invention concerne un élément (10) de garniture de siège d'automobile, comprenant : un bloc (12) de mousse ; une couche de renfort (16) ; et une couche de revêtement (18) ; la couche de renfort (16) étant disposée entre le bloc (12) de mousse et la couche de revêtement (18) et solidaire de chacun desdits bloc de mousse et couche de revêtement.

Chacun du bloc (12) de mousse et de la couche de renfort (16) est formé d'au moins 75% en masse de polyuréthane, préférentiellement d'au moins 85% en masse de polyuréthane.

## Description

La présente invention concerne un élément de garniture pour siège de véhicule, comprenant : un bloc de mousse ; une couche de renfort ; et une couche de revêtement ; la couche de renfort étant disposée entre le bloc de mousse et la couche de revêtement et solidaire de chacun desdits bloc de mousse et couche de revêtement.

Un élément de garniture similaire est notamment connu du document FR3092042 au nom de la Demanderesse.

Il est avantageux de proposer un élément de garniture nécessitant un minimum d'étapes d'assemblage de couches solides entre elles. Par ailleurs, la présence de différentes couches de natures chimiques différentes complique les opérations de recyclage d'un tel élément de garniture.

Afin de résoudre ces problèmes, l'invention a pour objet un élément de garniture tel que décrit ci-dessus, dans lequel chacun du bloc de mousse et de la couche de renfort est formé d'au moins 75% en masse de polyuréthane, préférentiellement d'au moins 85% en masse de polyuréthane.

Suivant d'autres aspects avantageux de l'invention, l'élément de garniture comporte l'une ou plusieurs des caractéristiques suivantes, prises isolément ou suivant toutes les combinaisons techniquement possibles :
- la couche de revêtement est formée d'au moins 75% en masse de polyuréthane, préférentiellement d'au moins 85% en masse de polyuréthane.
- une face de la couche de renfort comporte une première zone, au contact du bloc de mousse, et une deuxième zone, à l'écart dudit bloc de mousse ;
- le bloc de mousse présente une densité comprise entre 25 Kg/m³ et 80 Kg/m³ ;
- la couche de renfort présente une densité comprise entre 200 Kg/m³ et 1 000 Kg/m³ ;
- la couche de renfort présente une épaisseur comprise entre 200 µm et 2 mm ;
- la couche de revêtement présente une épaisseur comprise entre 10 µm et 100 µm.

L'invention se rapporte en outre à un procédé de fabrication d'un élément de garniture tel que décrit ci-dessus, comprenant les étapes suivantes : fourniture d'un moule comprenant un fond de moule et un couvercle, aptes à s'assembler de manière amovible pour former une enceinte ; le fond de moule et le couvercle étant dissociés, dépôt, sur une paroi du fond de moule, d'une première composition fluide, précurseur de la couche de revêtement, puis d'une deuxième composition fluide, précurseur de la couche de renfort, de sorte à solidariser la couche de renfort à la couche de revêtement; puis dépôt dans le fond de moule d'une troisième composition fluide, précurseur du bloc de mousse, ladite troisième composition fluide comprenant un agent d'expansion ; assemblage du fond de moule et du couvercle ; et expansion de la troisième composition fluide, de sorte à solidariser le bloc de mousse à la couche de renfort.

Suivant d'autres aspects avantageux de l'invention, le procédé comporte l'une ou plusieurs des caractéristiques suivantes, prises isolément ou suivant toutes les combinaisons techniquement possibles :
- lors de l'étape d'expansion de la troisième composition fluide, une partie du couvercle du moule est au contact de la deuxième zone de la couche de renfort ;
- la deuxième composition fluide comprend une quantité d'eau inférieure à 1% en masse par rapport à une masse totale de la deuxième composition fluide ;
- le dépôt d'au moins l'une des première et deuxième compositions fluides est réalisé par pulvérisation ;
- le dépôt de la troisième composition fluide est réalisé par coulage dans le fond de moule.

L'invention apparaîtra plus clairement à la lecture de la description qui va suivre, donnée uniquement à titre d'exemple non limitatif, et faite en référence aux dessins dans lesquels :
- la figure 1 est une vue en coupe d'un élément de garniture selon un mode de réalisation de l'invention ; et
- La figure 2 est une vue de détail, en coupe, de l'élément de garniture de la figure 1.

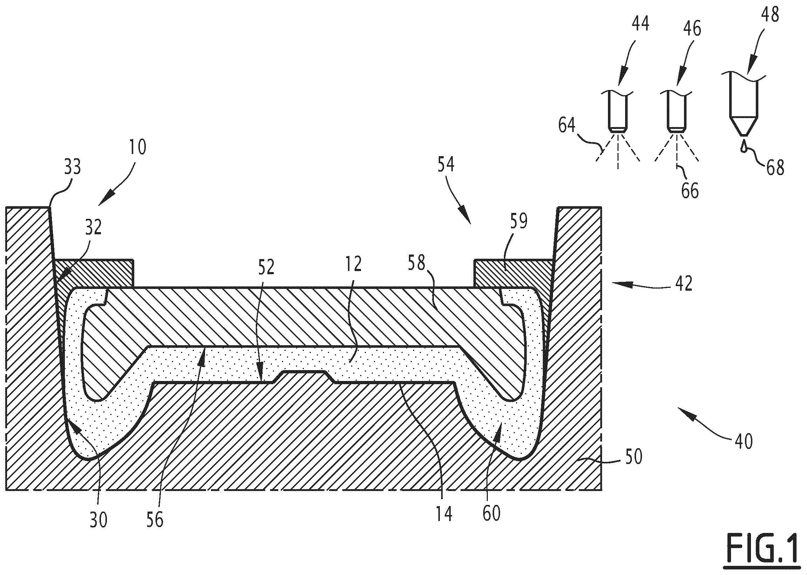

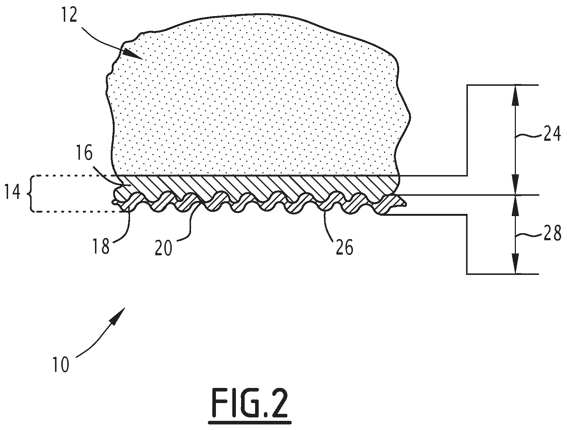

Les figures 1 et 2 représentent un élément 10 de garniture selon un mode de réalisation de l'invention. L'élément 10 de garniture est notamment destiné à équiper l'assise ou le dossier d'un siège de véhicule (non représenté). Un tel siège est notamment destiné à être monté dans un véhicule terrestre, aérien ou maritime, par exemple dans une automobile, un bus, un camion, un train, un avion, une moto, un bateau ou un véhicule agricole.

L'élément 10 de garniture comprend un bloc 12 et une couverture 14.

Le bloc 12 est formé en une mousse déformable élastiquement, ladite mousse étant composée d'un premier matériau polymère. Par « mousse », on entend que le bloc 12 présente une structure alvéolaire souple.

Préférentiellement, la mousse formant le bloc 12 présente une densité comprise entre 25 Kg/m³ et 80 Kg/m³. Préférentiellement, la mousse formant le bloc 12 présente une caractéristique de contrainte-déformation en pression comprise entre 3 KPa et 30 KPa selon la norme DIN EN ISO 3386.

Le premier matériau polymère comprend au moins 75% en masse de polyuréthane par rapport à une masse totale dudit premier matériau polymère. Préférentiellement, le premier matériau polymère comprend au moins 85% en masse de polyuréthane par rapport à une masse totale dudit premier matériau polymère, plus préférentiellement 100% en masse de polyuréthane.

Par exemple, lorsque le premier matériau polymère comprend moins de 100% en masse de polyuréthane, le premier matériau polymère comprend du polyuréthane ainsi qu'un matériau bio-sourcé ou recyclé et/ou un matériau issu de pneus et/ou du polytéréphtalate d'éthylène et/ou une charge inorganique.

Préférentiellement, une épaisseur du bloc 12 de mousse est comprise entre 5 mm et 200 mm.

La couverture 14 forme une nappe flexible. Comme visible sur la figure 2, la couverture 14 comporte une couche de renfort 16 et une couche de revêtement 18. Comme décrit ci-après, la couche de renfort 16 est disposée entre le bloc 12 de mousse et la couche de revêtement 18 et solidaire de chacun desdits bloc de mousse et couche de revêtement.

La couche de renfort 16 est formée d'un deuxième matériau polymère. Plus préférentiellement, le deuxième matériau polymère est non expansé, c'est-à-dire que ledit deuxième matériau ne comporte pas de cellules fermées.

Le deuxième matériau polymère comprend au moins 75% en masse de polyuréthane par rapport à une masse totale dudit deuxième matériau polymère. Préférentiellement, le deuxième matériau polymère comprend au moins 85% en masse de polyuréthane par rapport à une masse totale dudit deuxième matériau polymère, plus préférentiellement 100% en masse de polyuréthane.

Selon un exemple spécifique, le deuxième matériau polymère comprend du polyuréthane ainsi qu'un matériau bio-sourcé ou recyclé et/ou un matériau issu de pneus et/ou du polytéréphtalate d'éthylène et/ou une charge inorganique.

Préférentiellement, le deuxième matériau polymère présente une densité comprise entre 200 Kg/m³ et 1 000 Kg/m³.

La couche de renfort 16 comprend une première 20 et une deuxième 22 faces opposées. Une épaisseur 24 de la couche de renfort 16 est préférentiellement comprise entre 200 µm et 2 mm, plus préférentiellement comprise entre 0,5 mm et 1,5 mm.

La couche de revêtement 18 est solidaire de la première face 20 de la couche de renfort 16. A l'opposé de ladite couche de renfort, la couche de revêtement 18 comporte une face externe 26.

La couche de revêtement 18 est formée d'un troisième matériau polymère. Plus préférentiellement, le troisième matériau polymère est non expansé, c'est-à-dire que ledit troisième matériau ne comporte pas de cellules fermées.

Le troisième matériau polymère est une peinture dite de fond de moule, destinée à donner son aspect extérieur au produit final.

Préférentiellement, ledit troisième matériau polymère comprend au moins 75% en masse de polyuréthane par rapport à une masse totale dudit troisième matériau polymère. Plus préférentiellement, le troisième matériau polymère comprend au moins 85% en masse de polyuréthane par rapport à une masse totale dudit troisième matériau polymère.

Préférentiellement, le troisième matériau polymère est un matériau bi-composant. Un tel matériau confère de bonnes performances au produit final.

Préférentiellement, un extrait sec en masse de la peinture fond de moule est compris entre 20% et 40% de la masse liquide déposée.

Une épaisseur 28 de la couche de revêtement 18 est comprise entre 10 µm et 100 µm, plus préférentiellement comprise entre 15 µm et 50 µm.

Préférentiellement, comme décrit ci-après, la face externe 26 de la couche de revêtement 18 présente un aspect texturé ou non lisse, comportant par exemple de légères aspérités.

Ainsi, la couverture 14 comporte une face externe, formée par la face externe 26 de la couche de revêtement 18, et une face interne, formée par la deuxième face 22 de la couche de renfort 16.

Selon un mode de réalisation, la deuxième face 22 de la couche de renfort 16 comporte : une première zone 30, au contact du bloc 12 de mousse ; et une deuxième zone 32, à l'écart dudit bloc de mousse. De préférence, la deuxième zone 32 est adjacente à un bord 33 de la couverture 14. Plus préférentiellement, la deuxième zone 32 est disposée à une périphérie de la première zone 30.

La figure 1 montre une installation 40 pour la fabrication de l'élément 10 de garniture décrit ci-dessus.

L'installation 40 comporte un moule 42 et au moins un dispositif 44, 46, 48 d'application.

Le moule 42 comprend : un fond 50 de moule, comportant une première surface 52 ; et un couvercle 54, comportant une deuxième surface 56.

La première surface 52 du fond 50 de moule présente notamment une forme complémentaire de la face externe 26 de la couche de revêtement 18. En particulier, la première surface 52 du fond 50 de moule comporte de préférence de légères aspérités destinées à former la texture de ladite face externe 26.

La deuxième surface 56 du couvercle présente une forme complémentaire du bloc 12 de mousse. Dans le mode de réalisation représenté, le couvercle 54 comporte plusieurs parties 58, 59 amovibles les unes par rapport aux autres. Une telle configuration permet en particulier de s'adapter à une forme particulière du bloc 12 de mousse, notamment à une forme en contre-dépouille.

Le fond 50 de moule et le couvercle 54 sont aptes à s'assembler de manière amovible, pour former une enceinte 60 définie par les première 52 et deuxième 56 surfaces.

De préférence, le moule 42 comprend en outre des évents (non représentés) permettant un dégazage de l'enceinte 60.

Dans le mode de réalisation représenté, l'installation 40 comporte un premier 44, un deuxième 46 et un troisième 48 dispositifs d'application.

Le premier dispositif 44 d'application est apte à déposer une première composition fluide 64 sur le fond 50 de moule, au contact de la première surface 52. La première composition fluide 64 est précurseur du troisième matériau polymère formant la couche de revêtement 18.

De préférence, le premier dispositif 44 d'application est adapté à un dépôt par pulvérisation de la première composition fluide 64 sur le fond 50 de moule.

Le deuxième dispositif 46 d'application est apte à déposer une deuxième composition fluide 66 sur le fond 50 de moule. La deuxième composition fluide 66 est précurseur du deuxième matériau polymère formant la couche de renfort 18.

De préférence, la deuxième composition fluide 66 comprend une quantité d'eau inférieure à 1% en masse par rapport à une masse totale de la deuxième composition fluide.

De préférence, le deuxième dispositif 46 d'application est adapté à un dépôt par pulvérisation de la deuxième composition fluide 66 sur le fond 50 de moule.

Le troisième dispositif 48 d'application est apte à déposer une troisième composition fluide 68 dans le fond 50 de moule.

La troisième composition fluide 68 est précurseur du premier matériau polymère formant le bloc 12 de mousse. Ladite troisième composition fluide 68 comprend notamment un agent d'expansion.

Selon un mode de réalisation, le troisième dispositif 48 d'application est adapté à un dépôt par coulage de la troisième composition fluide 68 sur le fond 50 de moule. Selon une variante, le troisième dispositif 48 d'application est adapté à un dépôt de la troisième composition fluide 68 par injection dans le moule 42.

Un procédé de fabrication de l'élément 10 de garniture ci-dessus, au moyen de l'installation 40 décrite ci-dessus, va maintenant être décrit.

De manière optionnelle, un agent de démoulage est tout d'abord appliqué sur les première 52 et deuxième 56 surfaces du moule 42. Un tel agent de démoulage est par exemple sous la forme d'une solution liquide, pulvérisée sur les surfaces concernées. Par exemple, l'agent de démoulage comprend un composé anti-bruit incorporé. Alternativement, un composé anti-bruit est pulvérisé par-dessus l'agent de démoulage sur la deuxième surface 56, après la pulvérisation de l'agent de démoulage.

Ensuite, la première composition fluide 64 est pulvérisée sur la première surface 52 du fond 50 de moule, au moyen du premier dispositif 44 d'application. Puis la deuxième composition fluide 66 est pulvérisée sur la couche de première composition ainsi obtenue, au moyen du deuxième dispositif 66 d'application. Un précurseur de la couverture 14 est ainsi obtenu.

Ensuite, au moyen du troisième dispositif 48 d'application, la troisième composition fluide 68 est coulée dans le fond 50 de moule, sur ledit précurseur de la couverture 14. En particulier, le coulage est réalisé sur une première partie dudit précurseur correspondant à la première zone 30 de la deuxième surface 22 de la couche de renfort 16, telle que décrite ci-dessus.

Ensuite, le moule 42 est refermé en assemblant le fond 50 de moule et le couvercle 54. Selon un mode de réalisation, au moins une partie 59 du couvercle 54 est au contact d'une deuxième partie du précurseur de la couverture 14, correspondant à la deuxième zone 32 de la deuxième surface 22 de la couche de renfort 16, telle que décrite ci-dessus. De préférence, la fermeture du moule 42 est donc réalisée alors que les première 64 et deuxième 66 compositions fluides sont au moins partiellement durcies.

L'enceinte 60 est ainsi matérialisée. La troisième composition fluide 68 s'expanse, remplissant ladite enceinte 60 pour former le bloc 12 de mousse.

Après durcissement de la troisième composition fluide 68, conduisant à la formation de la mousse du bloc 12, l'élément 10 de garniture de la figure 1 est obtenu. Il est ensuite démoulé.

En variante au procédé décrit ci-dessus, le moule 42 est refermé avant l'application de la troisième composition fluide 68, cette dernière étant ensuite injectée dans l'enceinte 60.

Un tel procédé de fabrication permet d'obtenir un élément de garniture complet par simple application de différentes compositions fluides, sans étape ultérieure d'assemblage de matériaux solides entre eux.

L'élément 10 est ensuite assemblé à une armature (non représentée) pour former un siège de véhicule. Dans le cas où la deuxième surface 22 de la couche de renfort 16 présente la deuxième zone 32 non fixée au bloc 12 de mousse, ladite deuxième zone 32 est préférentiellement utilisée comme zone d'accroche de l'élément 10 à ladite armature. La deuxième zone 32 est par exemple enroulée autour de reliefs d'accroche (non représentés) présents sur ladite armature, ou encore fixée à des agrafes (non représentées) venant s'accrocher à ladite armature.

Chacun du bloc 12 de mousse, de la couche de renfort 16 et de la couche de revêtement 18 présentant une haute teneur en polyuréthane, un recyclage de l'élément 10 de garniture est facilité par rapport à un bloc 12 et une couverture 14 formés de matériaux distincts.

## Revendications

1. Elément (10) de garniture de siège d'automobile, comprenant : un bloc (12) de mousse ; une couche de renfort (16) ; et une couche de revêtement (18) ; la couche de renfort (16) étant disposée entre le bloc (12) de mousse et la couche de revêtement (18) et solidaire de chacun desdits bloc de mousse et couche de revêtement ;
l'élément de garniture étant **caractérisé en ce que** chacun du bloc (12) de mousse et de la couche de renfort (16) est formé d'au moins 75% en masse de polyuréthane, préférentiellement d'au moins 85% en masse de polyuréthane.

2. Elément de garniture selon la revendication 1, dans lequel la couche de revêtement (18) est formée d'au moins 75% en masse de polyuréthane, préférentiellement d'au moins 85% en masse de polyuréthane.

3. Elément de garniture selon la revendication 1 ou 2, dans lequel une face (22) de la couche de renfort (16) comporte une première zone (30), au contact du bloc (12) de mousse, et une deuxième zone (32), à l'écart dudit bloc de mousse.

4. Elément de garniture selon l'une des revendications précédentes, dans lequel le bloc (12) de mousse présente une densité comprise entre 25 Kg/m³ et 80 Kg/m³.

5. Elément de garniture selon l'une des revendications précédentes, dans lequel la couche de renfort (16) présente une densité comprise entre 200 Kg/m³ et 1 000 Kg/m³.

6. Elément de garniture selon l'une des revendications précédentes, dans lequel la couche de renfort (16) présente une épaisseur (24) comprise entre 200 µm et 2 mm.

7. Elément de garniture selon l'une des revendications précédentes, dans lequel la couche de revêtement (18) présente une épaisseur (28) comprise entre 10 µm et 100 µm.

8. Procédé de fabrication d'un élément de garniture selon l'une des revendications précédentes, comprenant les étapes suivantes :
- fourniture d'un moule (42) comprenant un fond (50) de moule et un couvercle (54), aptes à s'assembler de manière amovible pour former une enceinte (60) ;
- le fond de moule et le couvercle étant dissociés, dépôt, sur une paroi du fond de moule, d'une première composition fluide (64), précurseur de la couche de revêtement (18), puis d'une deuxième composition fluide (66), précurseur de la couche de renfort (16), de sorte à solidariser la couche de renfort (16) à la couche de revêtement (18) ; puis
- dépôt dans le fond (40) de moule d'une troisième composition fluide (68), précurseur du bloc (12) de mousse, ladite troisième composition fluide comprenant un agent d'expansion ; assemblage du fond de moule et du couvercle ; et expansion de la troisième composition fluide, de sorte à solidariser le bloc (12) de mousse à la couche de renfort (16).

9. Procédé de fabrication selon la revendication 8 prise en combinaison avec la revendication 3, dans lequel, lors de l'étape d'expansion de la troisième composition fluide (68), une partie (59) du couvercle (54) du moule est au contact de la deuxième zone (32) de la couche de renfort (16).

10. Procédé de fabrication selon la revendication 8 ou 9, dans lequel la deuxième composition fluide (66) comprend une quantité d'eau inférieure à 1% en masse par rapport à une masse totale de la deuxième composition fluide.
